(19) Europäisches Patentamt
European Patent Office
Office européen des brevets

(11) **EP 3 868 575 B1**

(12) **EUROPEAN PATENT SPECIFICATION**

(45) Date of publication and mention
of the grant of the patent:
**24.07.2024 Bulletin 2024/30**

(21) Application number: **19873081.4**

(22) Date of filing: **16.10.2019**

(51) International Patent Classification (IPC):
**B60C 9/20** (2006.01)     **B60C 9/00** (2006.01)
**B60C 9/18** (2006.01)     **D07B 1/06** (2006.01)

(52) Cooperative Patent Classification (CPC):
**B60C 9/2006;** B60C 9/0064; B60C 2001/0066;
B60C 2009/0021; B60C 2009/2247;
B60C 2009/2257; B60C 2009/2266

(86) International application number:
**PCT/JP2019/040762**

(87) International publication number:
**WO 2020/080441 (23.04.2020 Gazette 2020/17)**

(54) **ELASTOMER-METAL CORD COMPOSITE BODY, AND TIRE USING SAME**

ELASTOMER-METALLKORD-VERBUNDSTOFFKÖRPER UND REIFEN DAMIT

CORPS COMPOSITE ÉLASTOMÈRE-CÂBLÉ MÉTALLIQUE ET PNEU L'EMPLOYANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.10.2018 JP 2018196207**

(43) Date of publication of application:
**25.08.2021 Bulletin 2021/34**

(73) Proprietor: **BRIDGESTONE CORPORATION**
**Chuo-ku**
**Tokyo 104-8340 (JP)**

(72) Inventor: **UEMURA, Kazuki**
**Tokyo 104-8340 (JP)**

(74) Representative: **Marks & Clerk LLP**
**15 Fetter Lane**
**London EC4A 1BW (GB)**

(56) References cited:
WO-A1-2014/208480     JP-A- 2004 009 974
JP-A- 2017 101 352     JP-A- 2017 532 416
JP-A- H0 495 506     JP-A- H07 304 307
JP-A- H08 300 905     JP-A- H10 292 275
JP-A- H10 292 276     US-A1- 2013 206 302
US-A1- 2015 064 438     US-A1- 2016 159 154

**Description**

TECHNICAL FIELD

The present invention relates to an elastomer-metal cord composite, and a tire including the same. More particularly, the present invention relates to: an elastomer-metal cord composite in which a metal cord composed of a bundle of metal filaments that are arranged without being twisted together is coated with an elastomer; and a tire including the same.

BACKGROUND ART

Generally, inside a tire that requires strength, a carcass that includes reinforcing cords embedded along the meridian direction of the ring-shaped tire main is arranged, and a belt layer is arranged on the tire radial-direction outer side of the carcass. This belt layer is usually formed from an elastomer-metal cord composite obtained by coating a metal cord such as a steel cord with an elastomer, and imparts the tire with load resistance, traction resistance, and the like.

In recent years, there is an increasing demand for weight reduction of tires for the purpose of improving the fuel efficiency of automobiles. As a means for reducing the tire weight, metal cords for belt reinforcement have been drawing attention, and a large number of technologies for using metal filaments as a belt cord without twisting have been disclosed.

For example, Patent Document 1 discloses: a steel cord for tire reinforcement, in which the periphery of a steel cord composed of a single monofilament is coated with a thermoplastic elastomer composition obtained by dispersing an elastomer in a thermoplastic resin; and a tire including the same. Further, Patent Document 2 discloses a pneumatic radial tire including a steel cord in a belt layer of the tire, in which steel cord two to six main filaments of the same diameter are arranged parallel without being twisted together in such a manner to constitute a single layer as a main filament bundle, and a single straight steel filament of a smaller diameter than the main filaments is wound around the main filament bundle as a wrapping filament. Attention is also drawn to the disclosures of JP10-292275A, JP10-292276A, JP7-304307A, JP2017-101352A, WO2014/208480A1 and US2013/0206302A1.

RELATED ART DOCUMENTS

PATENT DOCUMENTS

[Patent Document 1] JP2010-053495A
[Patent Document 2] JP2012-106570A

SUMMARY OF THE INVENTION

PROBLEMS TO BE SOLVED BY THE INVENTION

With regard to the above, by arranging metal monofilaments into a bundle without any gap and coating this bundle with an elastomer to form a cord, a weight reduction due to a decrease in the belt gauge as well as an improvement in the belt edge separation (BES) resistance through securement of a distance between monofilament bundles can be achieved at the same time. However, in such a cord, since the filaments are in contact with one another on the side surface portions of adj acent metal filaments, elastomer non-permeation regions (non-elastomer-coated regions) continuous along the longitudinal direction are generated, as a result of which the corrosion propagation resistance is deteriorated when a damaged tire is submerged in water. In addition, since the presence of such non-elastomer-coated regions causes displacement of the metal filaments from each other during tire rolling and thus reduces the in-plane rigidity (rigidity in the ground-contact surface of the tire), an improvement in the steering stability cannot be attained. Moreover, there is a problem that the belt layer separation resistance is deteriorated in association with a gauge reduction of a belt treat.

In this respect, Patent Document 1 aimed at providing a pneumatic tire in which an improvement in the durability is attained by improving the adhesion of the steel cord for tire reinforcement, and Patent Document 2 aimed at providing a pneumatic radial tire that has excellent steering stability, ride comfort, and durability and realizes a weight reduction. These Patent Documents, however, did not conduct an investigation in terms of attaining both satisfactory corrosion propagation resistance and satisfactory belt layer separation resistance. Therefore, it is demanded to realize a reinforcing material that can satisfy these required performance.

In view of the above, an object of the present invention is to provide: an elastomer-metal cord composite, in which a metal cord composed of a bundle of plural metal filaments that are arranged without being twisted together is coated with an elastomer and which can improve various performance of a tire, such as steering stability, corrosion propagation resistance, and belt layer separation resistance; and a tire including the same.

MEANS FOR SOLVING THE PROBLEMS

The present inventor intensively studied and discovered that the above-described problems can be solved by adopting the below-described constitution for a bundle of metal filaments and defining the metal filaments contained in a cross-section of a metal cord to have a prescribed cross-sectional area ratio, thereby completing the present invention.

That is, the elastomer-metal cord composite of the present invention is an elastomer-metal cord composite as claimed in claim 1.

In the elastomer-metal cord composite of the present invention, it is preferred that the gap amount G be 0.01 mm to less than 0.24 mm. In the elastomer-metal cord composite of the present invention, the adjacent metal filaments have an elastomer coating ratio of 10% or higher per unit length on a widthwise side surface of the metal cord.

Further, in the elastomer-metal cord composite of the present invention, it is preferred that the diameter of the metal filaments be 0.15 mm to 0.40 mm. Still further, in the elastomer-metal cord composite of the present invention, an inter-cord distance w, which is a distance between adjacent metal cords that is measured in the direction orthogonal to the extending direction of the metal cords, be 0.25 mm to 2.0 mm.

In the present invention, for example, when a rubber and a steel cord are used as the elastomer and the metal cord, respectively, and the steel cord is coated with the rubber, vulcanized, and then pulled out of the resulting rubber-steel cord composite, the term "elastomer coating ratio" refers to an average of values that are obtained by measuring the length of the metal cord widthwise side surface of each steel filament coated with the rubber infiltrated into gaps between the steel filaments constituting the steel cord, and subsequently performing a calculation based on the following equation:

$$\text{Elastomer coating ratio} = (\text{Rubber-coated length/Sample length}) \times 100\ (\%).$$

It is noted here that the elastomer coating ratio can be calculated in the same manner also when an elastomer other than a rubber is used as the elastomer and when a metal cord other than a steel cord was used as the metal cord. Further, in the elastomer-metal cord composite of the present invention, the "straight metal filament" refers to a metal filament that is not intentionally patterned and is thus in a substantially unpatterned state.

A tire of the present invention is characterized by including the elastomer-metal cord composite of the present invention.

EFFECTS OF THE INVENTION

According to the present invention, an elastomer-metal cord composite, in which a metal cord composed of a bundle of plural metal filaments arranged without being twisted together is coated with an elastomer and which can improve various performance of a tire, such as steering stability, corrosion propagation resistance and belt layer separation resistance, as well as a tire including the same can be provided.

BRIEF DESCRIPTION OF THE DRAWINGS

[FIG. 1] FIG. 1 is a widthwise partial cross-sectional view illustrating an elastomer-metal cord composite according to one preferred embodiment of the present invention.

[FIG. 2] FIG. 2 is a schematic plan view illustrating a metal cord in the elastomer-metal cord composite according to one preferred embodiment of the present invention.

[FIG. 3] FIG. 3 is an explanatory drawing that relates to the definition of the cross-sectional area ratio of metal filaments contained in a cross-section of the metal cord of the present invention.

[FIG. 4] FIG. 4 is a schematic half cross-sectional view illustrating a tire according to one preferred embodiment of the present invention.

MODE FOR CARRYING OUT THE INVENTION

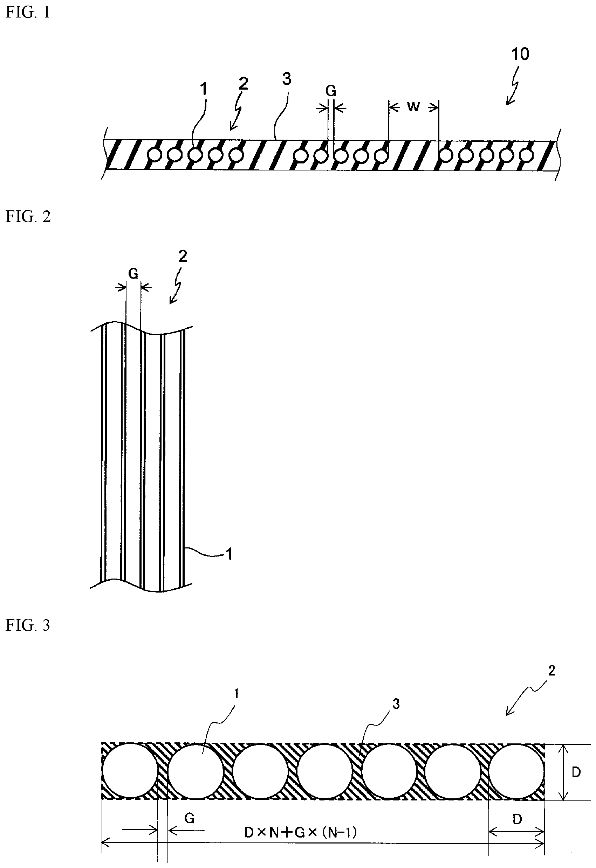

The elastomer-metal cord composite of the present invention will now be described in detail referring to the drawings. FIG. 1 is a widthwise partial cross-sectional view illustrating an elastomer-metal cord composite according to one preferred embodiment of the present invention, and FIG. 2 is a schematic plan view illustrating a metal cord in the elastomer-metal cord composite according to one preferred embodiment of the present invention.

An elastomer-metal cord composite 10 of the present invention is obtained by coating, with an elastomer 3, a metal cord 2 composed of a bundle of plural metal filaments 1 arranged in a single row without being twisted together. The metal cord 2 is constituted by a bundle of preferably 2 or more, more preferably 5 or more, but preferably 20 or less, more preferably 18 or less, still more preferably 15 or less, particularly preferably 12 or less metal filaments 1. In the illustrated example, five metal filaments 1 are arranged without being twisted together to form the metal cord 2.

As illustrated, in the elastomer-metal cord composite 10 of the present invention, a gap is provided between adjacent metal filaments 1. This allows the elastomer 3 to infiltrate into the gap, and continuous non-elastomer-coated regions between the metal filaments 1 are thereby eliminated, so that the elastomer can sufficiently permeate between adjacent metal filaments 1. As a result, the steel cord can undergo out-of-plane deformation when a compressive input is applied thereto, and breakage of the steel cord can thereby be inhibited. In addition, since water flow paths during submergence of a damaged tire are eliminated, the corrosion propagation resistance is largely improved. Moreover, adjacent metal filaments 1 are restrained with each other by the elastomer; therefore, by using the elastomer-metal cord composite 10 of the present invention as a belt cord of a tire, adjacent metal filaments are prevented from being displaced from one another even during rolling of the tire, as a result of which not only the belt in-plane rigidity can be enhanced, but also the steering stability can be improved.

Further, the present inventor discovered that good steering stability and separation resistance can be attained in a balanced manner by defining the metal filaments contained in a cross-section of the metal cord to have a prescribed cross-sectional area ratio. FIG. 3 shows an explanatory drawing that relates to the definition of the cross-sectional area ratio of the metal filaments contained in a cross-section of the metal cord of the present invention. In this illustrated example, seven metal filaments 1 are arranged without being twisted together to form the metal cord 2 and, specifically, seven unpatterned straight metal filaments 1 are parallelly arranged with gaps at equal intervals and coated with the elastomer 3. It is noted here that the term "gaps at equal intervals" used herein means a range that includes an error in the production.

In the present invention, as illustrated, when the diameter of the metal filaments 1 is defined as D (mm), a gap amount, which is a distance between the surfaces of adjacent metal filaments 1 that is measured in a direction orthogonal to the extending direction of the metal cord 2, is defined as G (mm), and the number of the metal filaments 1 constituting the metal cord 2 is defined as N (filaments), a relationship expressed by the following Formula (1) is satisfied:

$$0.45 \le [(D/2)^2 \times \pi \times N]/\{D \times [D \times N + G \times (N - 1)]\} \le 0.77 \quad (1)$$

wherein, D and G > 0, and N is an integer.

The above-described Formula (1) defines the cross-sectional area ratio of the metal filaments 1 per a single metal cord 2, taking the cross-sectional area of the dotted line part in the drawing as the cross-sectional area of the metal cord 2. That is, the cross-sectional area of the dotted line part in the drawing (cross-sectional area of metal filaments 1 + cross-sectional area of elastomer 3) is represented by the denominator $\{D \times [D \times N + G \times (N - 1)]\}$ of Formula (1), and the cross-sectional area of the metal filaments 1 contained in the dotted line part of the drawing is represented by the numerator $[(D/2)^2 \times \pi \times N]$ of Formula (1).

Accordingly, in the elastomer-metal cord composite 10 of the present invention, by using the metal cord 2 composed of a bundle of the metal filaments 1 that are arranged with the above-described prescribed amount of gaps and defining the metal filaments 1 contained in a cross-section of the metal cord 2 to have a prescribed cross-sectional area ratio, for example, the lightweightness, the steering stability, the corrosion propagation resistance, and the belt layer separation resistance can be improved in a balanced manner when the elastomer-metal cord composite 10 of the present invention is applied to a tire.

In the present invention, from the standpoint of obtaining various performance in a balanced manner, it is preferred that a relationship expressed by the following Formula (2) be satisfied:

$$0.48 \le [(D/2)^2 \times \pi \times N]/\{D \times [D \times N + G \times (N - 1)]\} \le 0.77 \quad (2),$$

and it is more preferred that a relationship expressed by the following Formula (3) be satisfied:

$$0.50 \leq [(D/2)^2 \times \pi \times N]/\{D \times [D \times N + G \times (N - 1)]\} \leq 0.77 \quad (3).$$

In the present invention, in order to eliminate the presence of continuous non-elastomer-coated regions between adjacent metal filaments so as not only to ensure the corrosion propagation resistance but also to improve the belt in-plane rigidity and thereby obtain a good steering stability-improving effect, the elastomer coating ratio of adjacent metal filaments 1 on a widthwise side surface of the metal cord 2 is 10% or higher, preferably 20% or higher, per unit length. The adjacent metal filaments 1 are in a state of being coated at a ratio of still more preferably 50% or higher, particularly preferably 80% or higher, most preferably 90% or higher.

Further, in the present invention, the amount of gaps between adjacent metal filaments 1, namely the gap amount G (mm) which is a distance between the surfaces of the adjacent metal filaments 1 that is measured in a direction perpendicular to the extending direction of the metal cord 2, is preferably 0.01 mm to less than 0.24 mm. By controlling the gap amount G (mm) to be less than 0.24 mm, the occurrence of separation between the metal filaments 1 in the bundle can be certainly inhibited. Meanwhile, by controlling the gap amount G (mm) to be 0.01 mm or greater, the generation of a continuous non-elastomer-coated region between the metal filaments 1 in the bundle can be effectively inhibited. The gap amount G (mm) is more preferably 0.03 mm to 0.20 mm, still more preferably 0.03 mm to 0.18 mm.

Still further, in the elastomer-metal cord composite 10 of the present invention, the metal filaments 1 have a diameter D of preferably 0.15 mm to 0.40 mm. The diameter D of the metal filaments 1 is more preferably not less than 0.18 mm, still more preferably not less than 0.20 mm, but more preferably 0.35 mm or less. By controlling the diameter D of the metal filaments 1 to be 0.40 mm or less, when the elastomer-metal cord composite 10 of the present invention is used in a tire, a good effect of reducing the weight of the tire can be obtained. Meanwhile, by controlling the diameter D of the metal filaments 1 to be 0.15 mm or larger, when the elastomer-metal cord composite 10 of the present invention is used in a belt layer of a tire, a sufficient belt strength can be exerted.

Moreover, in the elastomer-metal cord composite 10 of the present invention, the inter-cord distance w, which is a distance between metal cords 2 that is measured in the direction orthogonal to the extending direction of the metal cords 2, is 0.25 mm to 2.0 mm. By controlling the gap w between the metal cords 2 to be 0.25 mm or larger, when the elastomer-metal cord composite 10 of the present invention is used in a belt layer of a tire, the occurrence of belt edge separation, in which rubber detachment originating from a cord end at a belt widthwise edge propagates between adjacent metal cords, can be inhibited. Meanwhile, by controlling the gap w between the metal cords to be 2.0 mm or less, the belt rigidity can be maintained. The inter-cord distance w is preferably 0.3 mm to 1.8 mm, more preferably 0.35 mm to 1.5 mm.

In the elastomer-metal cord composite 10 of the present invention, the term "metal filament 1" generally refers to a wire-like metal that contains steel, namely iron, as a main component (the mass of iron exceeds 50% by mass with respect to a total mass of the metal filament), and each metal filament 1 may consist of only iron, or may contain a metal other than iron, such as zinc, copper, aluminum, or tin.

In the elastomer-metal cord composite 10 of the present invention, the surface state of the metal filaments 1 is not particularly restricted, and the metal filaments 1 may take, for example, the following form. That is, for example, the surface of each metal filament 1 has N atoms in an amount of 2% by atom to 60% by atom and a Cu/Zn ratio of 1 to 4. Further, in each metal filament 1, for example, the amount of phosphorus contained as an oxide in the filament outermost layer that constitutes a portion from the filament surface to 5 nm inward in the filament radial direction is 7.0% by atom or less in terms of the ratio of the whole amount excluding the carbon (C) amount.

In the elastomer-metal cord composite 10 of the present invention, the surface of the metal filament 1 may be treated by plating. The type of the plating is not particularly restricted, and examples thereof include zinc (Zn) plating, copper (Cu) plating, tin (Sn) plating, brass (copper-zinc (Cu-Zn)) plating, bronze (copper-tin (Cu-Sn)) plating, and ternary alloy plating such as copper-zinc-tin (Cu-Zn-Sn) and copper-zinc-cobalt (Cu-Zn-Co) plating. Thereamong, brass plating and copper-zinc-cobalt plating are preferred since a brass-plated metal filament exhibits excellent adhesion with a rubber. In the brass plating, the ratio of copper and zinc (copper:zinc) is usually 60:40 to 70:30 based on mass, and the copper-zinc-cobalt plating usually contains 60 to 75% by mass of copper and 0.5 to 10% by mass of cobalt. The thickness of the resulting plated layer is generally 100 nm to 300 nm.

In the elastomer-metal cord composite 10 of the present invention, the tensile strength and the cross-sectional shape of the metal filament 1 are not particularly restricted. For example, as the metal filament 1, a metal filament having a tensile strength of 2,500 MPa (250 kg/mm$^2$) or higher can be used. Further, the widthwise cross-sectional shape of the metal filament 1 is also not particularly restricted and may be, for example, elliptical, rectangular, triangular, or polygonal; however, it is preferably circular. In the elastomer-metal cord composite 10 of the present invention, a wrapping filament (spiral filament) may be used as well when it is necessary to restrain bundles of the metal filaments 1 constituting the metal cord 2.

Still further, in the elastomer-metal cord composite 10 of the present invention, the elastomer 3 coating the metal cord 2 is not particularly restricted and, for example, any rubber that is conventionally used for coating a metal cord can be employed. In addition, examples of an elastomer that can be preferably used include: diene-based rubbers and hydrogenation products thereof, such as natural rubbers (NR), isoprene rubbers (IR), epoxidized natural rubbers, styrene-butadiene rubbers (SBR), butadiene rubbers (BR, high-cis BR and low-cis BR), nitrile rubbers (NBR), hydrogenated NBRs, and hydrogenated SBRs; olefin-based rubbers, such as ethylene-propylene rubbers (EPDM and EPM), maleic acid-modified ethylene-propylene rubbers (M-EPM), butyl rubbers (IIR), copolymers of isobutylene and an aromatic vinyl or diene monomer, acrylic rubbers (ACM), and ionomers; halogen-containing rubbers, such as Br-IIR, Cl-IIR, brominated isobutylene-p-methylstyrene copolymers (Br-IPMS), chloroprene rubbers (CR), hydrin rubbers (CHR), chlorosulfonated polyethylene rubbers (CSM), chlorinated polyethylene rubbers (CM), and maleic acid-modified chlorinated polyethylene rubbers (M-CM); silicone rubbers, such as methyl vinyl silicone rubber, dimethyl silicone rubber, and methylphenyl vinyl silicone rubber; sulfur-containing rubbers, such as polysulfide rubbers; fluororubbers, such as vinylidene fluoride-based rubbers, fluorine-containing vinyl ether-based rubbers, tetrafluoroethylene-propylene-based rubbers, fluorine-containing silicone-based rubbers, and fluorine-containing phosphazene-based rubbers; and thermoplastic elastomers, such as styrene-based elastomers, olefin-based elastomers, ester-based elastomers, urethane-based elastomers, and polyamide-based elastomers. These elastomers may be used individually, or two or more thereof may be used in combination. Further, in these elastomers, an age inhibitor, zinc oxide, stearic acid and the like that are usually used in rubber products such as tires and conveyor belts may be incorporated as appropriate, in addition to sulfur, a vulcanization accelerator, and carbon black.

The elastomer-metal cord composite of the present invention can be produced by any known method. For example, the elastomer-metal cord composite of the present invention can be produced by parallelly arranging steel cords, which are metal cords each composed of a bundle of plural metal filaments that are arranged without being twisted together, at prescribed intervals, and rubber-coating the steel cords. An evaluation sample can be produced by subsequently vulcanizing the thus obtained composite under an ordinary condition. Further, patterning of the metal filaments can be performed in accordance with a conventional method using an ordinary patterning apparatus.

The tire of the present invention will now be described.

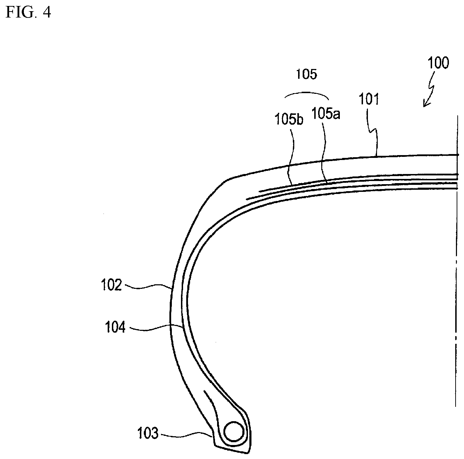

FIG. 4 is a schematic half cross-sectional view illustrating a tire according to one preferred embodiment of the present invention. The illustrated tire 100 of the present invention includes the elastomer-metal cord composite 10 of the present invention, whereby the steering stability, the corrosion propagation resistance, the belt layer separation resistance and the like can be improved. The illustrated tire 100 is a pneumatic tire including: a tread portion 101 which forms a ground-contact part; a pair of side wall portions 102 which continuously extend inward in the tire radial direction on the respective sides of the tread portion 101; and bead portions 103 which continuously extend on the inner circumferential side of each side wall portion 102. Examples of the tire 100 of the present invention include tires for passenger vehicles and tires for trucks and buses.

In the illustrated tire 100, the tread portion 101, the side wall portions 102 and the bead portions 103 are reinforced with a carcass 104, which is composed of a single carcass layer toroidally extending from one bead portion 103 to the other bead portion 103. In addition, the tread portion 101 is reinforced with a belt 105, which is composed of at least two layers (a first belt layer 105a and a second belt layer 105b in the illustrated example) that are arranged on the tire radial-direction outer side of the carcass 104 in a crown region. It is noted here that the carcass 104 may be composed of plural carcass layers, and an organic fiber cord extending in a direction substantially orthogonal to the tire circumferential direction, for example, at an angle of 70° to 90°, can be suitably used.

In the tire 100 of the present invention, the above-described elastomer-metal cord composite 10 of the present invention can be used in the first belt layer 105a and the second belt layer 105b. By using the elastomer-metal cord composite 10 of the present invention, the thickness of the first belt layer 105a and that of the second belt layer 105b can be reduced, so that the weight of the tire can be reduced. Moreover, by using the elastomer-metal cord composite 10 of the present invention as a cord of the belt, the steering stability, the corrosion propagation resistance, the belt layer separation resistance and the like can be improved at the same time. In the belt 105, the cord angle can be set at 30° or smaller with respect to the tire circumferential direction.

The tire 100 of the present invention may have any constitution as long as it includes the elastomer-metal cord composite 10 of the present invention, and other aspects of a specific tire structure are not particularly restricted. In addition, the part to which the elastomer-metal cord composite 10 of the present invention is applied is not restricted to the belt 105. For example, the elastomer-metal cord composite 10 of the present invention may be used as a belt reinforcing layer arranged on the tire radial-direction outer side of the belt 105, or as other reinforcing member. As a gas filled into the tire 100, normal air or an air with an adjusted oxygen partial pressure, as well as an inert gas such as nitrogen, argon or helium, can be used.

EXAMPLES

The present invention will now be described in more detail by way of Examples thereof.

(Production of Elastomer-Metal Cord Composite)

As metal cords according to the respective conditions shown in Table below, steel cords were covered with a sheet from both above and below, which sheet was made of the below-described rubber composition and had a thickness of about 0.5 mm, whereby elastomer-metal cord composite of Example and Comparative Examples were produced.

| | |
|---|---|
| Natural rubber | 100 parts by mass |
| Carbon black*1 | 61 parts by mass |
| Zinc white | 5 parts by mass |
| Anti-aging agent*2 | 1 part by mass |
| Vulcanization accelerator*3 | 1 part by mass |
| Sulfur*4 | 5 parts by mass |

*1) N326, DBP oil absorption amount: 72 ml/100 g, $N_2SA$: 78 $m^2/g$

*2) N-phenyl-N'-1,3-dimethylbutyl-p-phenylenediamine (trade name: NOCRAC 6C, manufactured by Ouchi Shinko Chemical Industrial Co., Ltd.)

*3) N,N'-dicyclohexyl-2-benzothiazyl sulfenamide (trade name: NOCCELER DZ, manufactured by Ouchi Shinko Chemical Industrial Co., Ltd.)

*4) insoluble sulfur (trade name: CRYSTEX HS OT-20, manufactured by FlexSys Inc.)

For the thus obtained elastomer-metal cord composite of Example 1 and Comparative Examples 1 and 2, the elastomer coating ratio and the steering stability were evaluated. The elastomer coating ratio was determined by the following procedure. The thus obtained results are shown together in Table below.

<Elastomer Coating Ratio (%)>

Each steel cord was coated with a rubber and vulcanized under a vulcanization condition of 160°C for 10 to 15 minutes, and the steel cord was subsequently pulled out of the resulting rubber-steel composite, after which the length of the metal cord widthwise side surface of each steel filament coated with the rubber infiltrated into gaps between the steel filaments constituting the steel cord was measured, and the elastomer coating ratio was determined as an average of the values calculated based on the following equation. The equation used for calculating the elastomer coating ratio was as follows:

$$\text{Elastomer coating ratio} = (\text{Rubber-coated length/Sample length}) \times 100 \ (\%)$$

It is noted here that the rubber-coated length is the length of a region of the steel filament surface that was completely covered with the rubber when the steel cord was pulled out and observed from a direction orthogonal to the cord longitudinal direction. A larger value indicates a higher adhesive strength and superior performance.

<Steering Stability>

For Example 1 and Comparative Examples 1 and 2, using intersecting belt layer samples that were prepared from each of the above-obtained rubber-steel cord composite, the in-plane rigidity was evaluated as an index of steering stability. A jig was set on two spots underneath and one spot on top of each intersecting belt layer sample, and a load applied to the sample when the jig was pressed at one spot on top was defined and evaluated as the in-plane rigidity. Taking the result of Comparative Example 1 as a reference "Δ", poor steering stability was evaluated as "×", equivalent steering stability was evaluated as "Δ", excellent steering stability was evaluated as "○", and extremely excellent steering stability was evaluated as "◎".

[Table 1]

| | | Comparative Example 1 | Comparative Example 2 | Example 1 |
|---|---|---|---|---|
| Belt layer | Cord structure | $1 \times 2 \times 0.3^{*10}$ | $0.25 \times 5$ filaments bundle | $0.25 \times 7$ filaments bundle |
| | Patterning condition | - | 0 | straight |
| | Gap amount G (mm) | - | 0 | 0.1 |
| | End count (cords/50 mm) | 38 | 21.8 | 15.0 |
| | Cord thickness D (mm) | 0.6 | 0.25 | 0.25 |
| | Cord width $[D \times N + G \times (N - 1)]$ (mm) | 0.6 | 1.25 | 2.35 |
| | Cord cross-sectional area $\{D \times [D \times N + G \times (N - 1)]$ (mm$^2$) | 0.36 | 0.31 | 0.59 |
| | Filament diameter (mm) | 0.3 | 0.25 | 0.25 |
| | Number of filaments N (filaments) | 2 | 5 | 7 |
| | Filament cross-sectional area $[(D/2)^2 \times \pi \times N]$ (mm$^2$) | 0.14 | 0.25 | 0.34 |
| | Filament cross-sectional area ratio $[(D/2)^2 \times \pi \times N]/\{D \times [D \times N + G \times (N - 1)]$ ($\times$ 100) (%) | 39 | 80 | 58 |
| | Inter-cord distance w$^{*11}$ (mm) | 0.5 | 1.21 | 1.09 |
| Evaluation results | Elastomer coating ratio (%) | 50 | 0 | 100 |
| | Steering stability | △ | × | ◎ |

$^{*10)}$ For comparison, the cord cross-sectional area in Comparative Example 1 was calculated as $(D \times 2)^2$ with respect to the filament diameter D, and the filament cross-sectional area was calculated as $(D/2)^2 \times \pi \times 2$.

$^{*11)}$ This represents the thickness of the rubber existing between the metal cords in each belt layer of Example and Comparative Examples, which was measured in a direction orthogonal to the extending direction of the metal cords.

The elastomer-metal cord composite of Example 1 exhibited superior separation resistance based on the elastomer-metal cord composite of Comparative Example 1. On the other hand, the elastomer-metal cord composite of Comparative Example 2 had inferior separation resistance than the elastomer-metal cord composite of Comparative Example 1.

As shown in Table above, by defining the constitution of a bundle of metal filaments and defining the metal filaments contained in a cross-section of a metal cord to have a prescribed cross-sectional area ratio, an elastomer-metal cord composite which can improve various performance of a tire, such as steering stability, corrosion propagation resistance and belt layer separation resistance, as well as a tire can be obtained.

DESCRIPTION OF SYMBOLS

1: metal filament
2: metal cord
3: elastomer
10: elastomer-metal cord composite
100: tire (pneumatic tire)
101: tread portion
102: side wall portion
103: bead portion
104: carcass
105: belt
105a: first belt layer
105b: second belt layer

**Claims**

1. An elastomer-metal cord composite (10), wherein a metal cord (2) consisting of a bundle of plural metal filaments (1) arranged in a single row without being twisted together is coated with an elastomer (3),
wherein

a gap (G) is provided between adjacent metal filaments (1),
when the diameter of the metal filaments (1) is defined as D (mm), a gap amount, which is a distance between the surfaces of the adjacent metal filaments (1) that is measured in a direction orthogonal to an extending direction of the metal cord (2), is defined as G (mm), and the number of metal filaments (1) constituting the metal cord (2) is defined as N (filaments), the elastomer-metal cord composite (10) satisfies a relationship expressed by the following Formula (1):

$$0.45 \leq [(D/2)^2 \times \pi \times N]/\{D \times [D \times N + G \times (N - 1)]\} \leq 0.77 \quad (1)$$

wherein, D and G > 0, and N is an integer,
the adjacent metal filaments (1) have an elastomer coating ratio of 10% or higher per unit length on a widthwise side surface of the metal cord (2), and
an inter-cord distance w, which is a distance between adjacent metal cords (2) that is measured in the direction orthogonal to the extending direction of the metal cords (2), is 0.25 mm to 2.0 mm,
**characterized in that** the metal filaments (1) are unpatterned straight metal filaments.

2. The elastomer-metal cord composite (10) according to claim 1, wherein the gap amount G is 0.01 mm or more and less than 0.24 mm.

3. The elastomer-metal cord composite (10) according to claim 1 or 2, wherein the diameter (D) of the metal filaments is 0.15 mm to 0.40 mm.

4. A tire (100), comprising the elastomer-metal cord composite (10) according to any one of claims 1 to 3.

**Patentansprüche**

1. Verbundswerkstoff (10) aus einem Elastomer und Metallkorden, wobei ein Metallkord (2), der aus einem Bündel von mehreren Metallfilamenten (1) besteht, die in einer einzigen Reihe angeordnet sind, ohne umeinander gewickelt zu sein, mit einem Elastomer (3) beschichtet ist,

wobei

ein Spalt (G) zwischen angrenzenden Metallfilamenten (1) bereitgestellt ist,
wenn der Durchmesser der Metallfilamente (1) als D (mm) definiert ist, ein Spaltbetrag, der ein Abstand zwischen den Oberflächen der angrenzenden Metallfilamente (1) ist, der in einer Richtung orthogonal zu einer Erstreckungsrichtung des Metallkords (2) gemessen wird, als G (mm) definiert ist, und die Anzahl von Metallfilamenten (1), die den Metallkord (2) bilden, als N (Filamente) definiert ist, der Verbundswerkstoff (10) aus einem Elastomer und Metallkorden ein durch die folgende Formel (1) ausgedrücktes Verhältnis erfüllt:

$$0{,}45 \leq [\left(\frac{D}{2}\right)^2 \times \pi \times N]/\{D \times [D \times N + G \times (N-1)]\} \leq 0{,}77 \ \ (1)$$

wobei D und G > 0, und N eine ganze Zahl ist,
die angrenzenden Metallfilamente (1) ein Elastomer-Beschichtungsverhältnis von 10 % oder mehr pro Einheitslänge auf einer Seitenoberfläche der Breite nach des Metallkords (2) aufweisen, und
ein Inter-Kord-Abstand w, der ein Abstand zwischen angrenzenden Metallkorden (2) ist, der in der Richtung orthogonal zu der Erstreckungsrichtung der Metallkorde (2) gemessen wird, 0,25 mm bis 2,0 mm beträgt, **dadurch gekennzeichnet, dass** die Metallfilamente (1) gerade Metallfilamente ohne Muster sind.

2. Verbundswerkstoff (10) aus einem Elastomer und Metallkorden nach Anspruch 1, wobei der Spaltbetrag G 0,01 mm oder mehr und weniger als 0,24 mm beträgt.

3. Verbundswerkstoff (10) aus einem Elastomer und Metallkorden nach Anspruch 1 oder 2, wobei der Durchmesser (D) der Metallfilamente 0,15 mm bis 0,40 mm beträgt.

4. Reifen (100), umfassend den Verbundswerkstoff (10) aus einem Elastomer und Metallkorden nach einem der Ansprüche 1 bis 3.

**Revendications**

1. Composite élastomère-câblé métallique (10), dans lequel un câblé métallique (2) composé d'un faisceau de plusieurs filaments métalliques (1) agencés en une seule rangée sans être torsadés ensemble est recouvert d'un élastomère (3),
dans lequel

un espace (G) est ménagé entre des filaments métalliques adjacents (1),
lorsque le diamètre des filaments métalliques (1) est défini comme D (en mm), une valeur d'écart, qui est une distance entre les surfaces des filaments métalliques adjacents (1) mesurée dans une direction orthogonale à une direction d'extension du câblé métallique (2), est définie comme G (en mm), et le nombre de filaments métalliques (1) constituant le câblé métallique (2) est défini comme N (filaments), le composite élastomère-câblé métallique (10) satisfait à une relation exprimée par la formule (1) suivante :

$$0{,}45 \leq [\left(\frac{D}{2}\right)^2 \times \pi \times N]/\{D \times [D \times N + G \times (N-1)]\} \leq 0{,}77 \ \ (1)$$

dans laquelle D et G > 0, et N est un nombre entier,
les filaments métalliques adjacents (1) ont un taux de revêtement élastomère de 10 % ou plus par unité de longueur sur une surface latérale dans le sens de la largeur du câblé métallique (2), et
une distance inter-câblés w, qui est une distance entre des câblés métalliques adjacents (2) mesurée dans la direction orthogonale à la direction d'extension des câblés métalliques (2), est comprise entre 0,25 mm et 2,0 mm, **caractérisé en ce que** les filaments métalliques (1) sont des filaments métalliques droits sans motif.

2. Composite élastomère-câblé métallique (10) selon la revendication 1, dans lequel la valeur d'écart G est supérieure ou égale à 0,01 mm et inférieure à 0,24 mm.

**3.** Composite élastomère-câblé métallique (10) selon les revendications 1 ou 2, dans lequel le diamètre (D) des filaments métalliques est compris entre 0,15 mm et 0,40 mm.

**4.** Bandage pneumatique (100), comprenant le composite élastomère-câblé métallique (10) selon l'une quelconque des revendications 1 à 3.

FIG. 1

FIG. 2

FIG. 3

FIG. 4

**EP 3 868 575 B1**

## REFERENCES CITED IN THE DESCRIPTION

**Patent documents cited in the description**

- JP 10292275 A
- JP 10292276 A
- JP 7304307 A
- JP 2017101352 A
- WO 2014208480 A1
- US 20130206302 A1
- JP 2010053495 A
- JP 2012106570 A